Europäisches Patentamt

European Patent Office

Office européen des brevets

(19)

(11) Numéro de publication : **0 689 302 A1**

# (12) DEMANDE DE BREVET EUROPEEN

(21) Numéro de dépôt : **95401438.7**

(22) Date de dépôt : **19.06.95**

(51) Int. Cl.⁶ : **H04B 7/212**

(30) Priorité : **21.06.94 FR 9407590**

(43) Date de publication de la demande :
**27.12.95 Bulletin 95/52**

(84) Etats contractants désignés :
**AT BE CH DE DK ES GB IT LI NL SE**

(71) Demandeur : **ALCATEL MOBILE COMMUNICATION FRANCE**
**10, rue de la Baume**
**F-75008 Paris (FR)**

(72) Inventeur : **Chiodini, Alain**
**59, Avenue Edouard Vaillant**
**F-92100 Boulogne (FR)**

(74) Mandataire : **El Manouni, Josiane et al**
**SOSPI**
**14-16, rue de la Baume**
**F-75008 Paris (FR)**

(54) **Signal de contrôle pour récepteurs, dispositif de synchronisation, dispositif d'égalisation, procédé de synchronisation et récepteurs correspondants**

(57) L'invention concerne un signal de contrôle pour récepteurs, formé par la juxtaposition de deux éléments de signaux (21, 22) d'égales durées et temporellement symétriques. Ce signal peut par exemple comprendre au moins une première séquence numérique pseudo-aléatoire de synchronisation $s(N_S-1)$ à $s(0)$ et, périodiquement, au moins une seconde séquence numérique $s(N_S-1)$ à $s(0)$, correspondant à l'inverse, obtenu par symétrie temporelle, de ladite première séquence.

Il peut notamment être utilisé pour synchroniser fréquentiellement et temporellement des récepteurs et/ou pour égaliser les signaux reçus par lesdits récepteurs. L'invention concerne également les procédés et dispositifs exploitant ce signal.

Fig. 2

EP 0 689 302 A1

Le domaine de l'invention est celui de la transmission de signaux numériques, notamment vers des mobiles. Plus précisément, l'invention concerne le contrôle et l'optimisation de la réception de tels signaux. En particulier, l'invention concerne d'une part la synchronisation fréquentielle et temporelle des récepteurs de tels signaux, et d'autre part l'égalisation de canal.

L'invention s'applique à tout type de systèmes de transmission numériques, qu'il s'agisse de systèmes de radiotéléphonie de radiodiffusion, de radiomessagerie... Un domaine d'application privilégié de l'invention est les systèmes de radiotéléphonie cellulaire. L'invention peut ainsi être mise en oeuvre, par exemple, dans les systèmes AMRC (Accès Multiple par Répartition en Code) diffusés par satellites, tels que le système GLOBALSTAR, ou encore dans les systèmes AMRT (Accès Multiple par Répartition en Temps) à diffusion par voie terrestre, tels que le système GSM.

Dans les systèmes de radiotéléphonie cellulaire, l'acquisition de la synchronisation est la première opération effectuée par un terminal lors de la mise sous tension. Elle comprend généralement deux phases :

- la première phase, appelée synchronisation fréquentielle, consiste à acquérir la référence fréquentielle de la station de base.
- la seconde phase, appelée synchronisation temporelle, consiste à acquérir la base de temps de la station de base.

Classiquement, ces deux opérations sont indépendantes. Elles s'appuient sur des signaux de référence distincts et indépendants.

Ainsi, dans un système à Accès Multiple par Répartition en Code, chaque station de base diffuse deux signaux destinés à l'acquisition et au maintien de la synchronisation :

- Le signal pilote, constitué par l'émission continue d'une séquence pseudo-aléatoire PN (= Pseudo-Noise en anglais) servant à l'étalement des données, non modulée par de l'information. Ce signal, suivi en permanence par la station mobile, assure le maintien de la synchronisation temporelle et fréquentielle ;
- le signal de synchronisation achemine l'information utile lors de l'établissement ou de la réception d'appels téléphoniques (identité de la cellule, puissance du signal pilote et décalage temporel initial de la séquence d'étalement).

Cette technique est complexe et non adaptée aux systèmes de diffusion par satellites. Par exemple, l'adaptation du système AMRC au système Globalstar pose deux problèmes majeurs :

- les signaux en provenance du satellite sont affectés par un fort déplacement Doppler en raison de la vitesse de défilement élevée du satellite ;

- la distance entre la station mobile et le satellite défilant varie de plusieurs milliers de kilomètres en quelques minutes et par conséquent la variation instantanée du délai de propagation est importante.

De même, dans le cas d'un système à Accès Multiple par Répartition dans le Temps, tel que le système GSM, la synchronisation initiale est effectuée à l'aide de deux paquets spécifiques émis à intervalles de temps réguliers sur la porteuse BCCH (Broadcast Control CHannel) :

- le premier paquet appelé FCCH (Frequency Correction CHannel) permet à la station mobile d'acquérir la référence fréquentielle de la station de base. Ce paquet contient une sinusoïde pure;
- le second paquet appelé SCH (Synchronisation CHannel) permet quant à lui d'acquérir la référence temporelle. Ce paquet contient une séquence binaire qui possède des propriétés d'autocorrélation intéressantes.

Ces deux paquets diffusés régulièrement occupent une ressource non négligeable sur la porteuse BCCH.

Par ailleurs, on sait que lorsqu'un émetteur (station de base ou station mobile) émet une séquence de symboles dans un canal de transmission, la séquence émise subit des altérations, si bien que la séquence des symboles reçus par le récepteur ne lui est pas identique. La principale de ces altérations est l'interférence entre symboles qui est due au fait qu'un symbole émis peut emprunter plusieurs trajets dans le canal de transmission (réflexions multiples sur les obstacles environnants). Lorsque l'intervalle de temps séparant deux trajets possibles est supérieur à la durée d'un symbole, deux symboles successifs peuvent interférer l'un avec l'autre.

Au niveau du récepteur, la correction de l'interférence entre symboles nécessite l'utilisation d'un égaliseur qui, pour fonctionner correctement, doit connaître la réponse impulsionnelle du canal de transmission.

Dans le système GSM, une séquence de symboles particuliers appelée séquence d'apprentissage est insérée au milieu de chaque paquet transmis. La définition de la séquence d'apprentissage dépend des caractéristiques du canal de transmission et, en particulier, de sa longueur L définie par l'intervalle de temps séparant le trajet le plus court du trajet le plus long (la longueur du canal de transmission peut d'ailleurs être exprimée en nombre de durée-symbole).

Dans ce système, le calcul de la réponse impulsionnelle h(t) du canal est effectué de la manière suivante : le récepteur dispose d'une réplique de la séquence d'apprentissage utilisée qu'il corrèle avec la séquence reçue correspondante. Le résultat de l'opération d'intercorrélation constitue un jeu de coefficients h(i) (i variant de 0 jusqu'à L) destinées à alimenter l'égaliseur. Le trajet le plus court correspond à h(0). L'estimation du canal est effectuée après la synchronisation.

Cette technique connue présente l'inconvénient majeur d'imposer la présence d'une séquence d'apprentissage dans chaque paquet de données, au détriment du débit utile.

L'invention a notamment pour objectif de pallier ces différents inconvénients de l'état de la technique.

Plus précisément, un objectif de l'invention est de fournir une technique de synchronisation fréquentielle et temporelle permettant de limiter les ressources nécessaires, tant en fréquence (cas de l'AMRC notamment) qu'en temps (cas de l'AMRT).

Un autre objectif de l'invention est de fournir une telle technique qui soit simple à mettre en oeuvre dans les récepteurs, et d'un coût peu élevé.

L'invention a encore pour objectif de fournir une telle technique, qui soit compatible avec la diffusion par satellites, c'est-à-dire, en particulier, qui prennent en compte les déplacements fréquentiels, notamment les déplacements Doppler, et les délais de propagation.

L'invention a également pour objectif de fournir une technique d'égalisation de canal permettant d'obtenir un débit utile supérieur à ceux permis par les techniques connues, notamment pour les systèmes AMRC.

Un autre objectif de l'invention est encore de fournir de telles techniques utilisant un unique signal de contrôle.

Ces objectifs, ainsi que d'autres qui apparaîtront par la suite, sont atteints selon l'invention à l'aide d'un signal de contrôle pour récepteurs formé par la juxtaposition de deux éléments de signaux d'égales durées et temporellement symétriques.

Ce signal peut être construit à partir d'une séquence numérique, ou obtenu par voie analogique.

Dans le premier cas, le signal peut comprendre au moins une première séquence numérique pseudo-aléatoire de synchronisation minimum s(0) à s($N_S$-1), et, périodiquement, au moins une seconde séquence numérique s($N_S$-1) à s(0), correspondant à l'inverse, obtenu par symétrie temporelle, de ladite première séquence.

Ainsi, l'invention concerne notamment une structure de signal de contrôle, encore appelé signal pilote, pouvant être utilisé notamment pour la synchronisation fréquentielle et temporelle des récepteurs et pour l'égalisation de canal.

Classiquement, un tel signal comprend une séquence pseudo-aléatoire connue des récepteurs et répétée en permanence (système AMRC) ou régulièrement (système AMRT). Selon l'invention, on insère périodiquement une séquence inverse (c'est-à-dire obtenue par symétrie temporelle).

Comme on le verra par la suite, cette structure de signal permet, après analyse, de récupérer la référence temporelle de la station de base et de mesurer le déplacement Doppler.

Si le signal de synchronisation est construit numériquement, alors la symétrie existe à deux niveaux : au niveau de la séquence numérique pseudo-aléatoire d'une part, et au niveau des signaux modulés correspondants d'autre part. En conséquence, la seconde partie peut être obtenue soit au niveau numérique, soit être directement synthétisée au niveau du signal modulé.

La seconde séquence inverse est insérée périodiquement, avec une période d'occurence tenant compte notamment de la probabilité de fausse alarme et de la variation maximale de déplacement Doppler admissible par le récepteur entre deux estimations successives.

Selon un mode de réalisation préférentiel de l'invention, le dit signal comprend alternativement ladite première séquence, puis ladite seconde séquence.

Un tel signal peut notamment être utilisé pour synchroniser des récepteurs AMRC ou des récepteurs AMRT.

Dans ce dernier cas, il peut se présenter sous la forme de paquets de synchronisation régulièrement insérés dans un signal principal, chacun desdits paquets de synchronisation comprenant successivement ladite première séquence, puis ladite seconde séquence.

Selon un mode de réalisation avantageux de l'invention, ledit signal est transmis par satellite.

L'invention concerne également un dispositif de synchronisation fréquentielle et temporelle destiné à équiper un récepteur de signaux numériques et exploitant un signal tel que décrit ci-dessus.

Avantageusement, un tel dispositif comprend :
- un échantillonneur délivrant des séries d'échantillons x(i) dudit signal de synchronisation correspondant auxdites séquences ;
- un premier registre à décalage comprenant N cellules, alimenté par ledit échantillonneur ;
- un second registre à décalage comprenant N cellules, alimenté par la sortie dudit premier registre à décalage ;
- des moyens de multiplication deux à deux du contenu des cellules de même rang desdits premier et second registres à décalage, délivrant N valeurs c(0) à c(N-1) ; et
- des moyens d'analyse spectrale desdites N valeurs, délivrant d'une part une première information représentative d'une référence temporelle, et d'autre part une seconde information représentative du déplacement fréquentiel, et par exemple du déplacement Doppler.

Ce dispositif peut également être utilisé pour estimer la réponse impulsionnelle du canal de transmission.

L'invention concerne encore un procédé de synchronisation fréquentielle et temporelle à l'aide d'un tel signal, comprenant les étapes suivantes :

- réception de 2N échantillons correspondant respectivement aux $N_S$ éléments numériques de ladite première séquence s(0) à s($N_S$-1) et aux $N_S$ éléments numériques de ladite seconde séquence s($N_S$-1) à s(0) ;
- multiplication deux à deux des éléments numériques de même rang de chacune desdites séquences, délivrant N valeurs

$$c(i) = x(i) * x(N - 1 - i) ;$$

- analyse spectrale desdites N valeurs, de façon à déterminer d'une part une première information représentative d'une référence temporelle, et d'autre part une seconde information représentative du déplacement fréquentiel, et par exemple du déplacement Doppler.

De façon avantageuse, lesdites valeurs c(i) s'écrivent :

$$c(nT_e) = 1/2.\cos(2\pi\delta(2N - 1)T_e + 2\Phi(nT_e))$$
$$+ 1/2.\cos(4\pi\delta nT_e - (2\pi\delta(2N - 1)T_e)) \quad (1)$$

où : n est un indice variant de 0 à N-1 ;

$T_e$ est la période d'échantillonnage dudit signal de synchronisation ;

$\delta$ est représentatif dudit déplacement fréquentiel ;

$\Phi$ est représentatif de ladite référence temporelle ;

et ladite étape d'analyse comprend les étapes suivantes :

- analyse du premier terme de l'équation (1), correspondant à un signal à spectre étalé, pour déterminer ladite référence temporelle ; et
- analyse du second terme de l'équation (1), correspondant à une sinusoïde de fréquence $2\delta$, pour déterminer ladite information représentative dudit déplacement Doppler.

L'invention concerne encore un procédé de synchronisation fréquentielle et temporelle pour récepteurs de signaux numériques, selon lequel on transmet vers lesdits récepteurs au moins une première séquence numérique pseudo-aléatoire de synchronisation s(0) à s($N_S$-1), et, au moins périodiquement, au moins une seconde séquence numérique s($N_S$-1) à s(0), correspondant à l'inverse, obtenu par symétrie temporelle, de ladite première séquence.

En d'autres termes, ladite seconde séquence peut être transmise sur un autre canal que la première séquence. Dans ce cas, il n'est pas nécessaire d'interrompre la transmission de la première séquence pour transmette la seconde.

D'autres caractéristiques et avantages de l'invention apparaîtront à la lecture de la description suivante de deux modes de réalisation préférentiels de l'invention, donnés à titre de simples exemples illustratifs et non limitatifs et des dessins annexés, dans lesquels :

- la figure 1 illustre la structure d'un signal pilote de type connu, pour un système de radiotéléphonie AMRC ;
- la figure 2 illustre la structure d'un signal pilote selon l'invention, également pour un système de radiotéléphonie AMRC ;
- la figure 3 présente un schéma synoptique d'un dispositif de synchronisation fréquentielle et temporelle mettant en oeuvre le signal de la figure 2;
- la figure 4 illustre les deux paquets de synchronisation fréquentielle et temporelle respectivement, utilisés classiquement dans le système GSM;
- la figure 5 présente un paquet unique de synchronisation fréquentielle et temporelle selon l'invention, pouvant être mis en oeuvre dans le système GSM, ou dans tout autre système AMRT;
- les figures 6 à 10 illustrent l'application de la présente invention à la radiolocalisation :
    - . la figure 6 illustre schématiquement la zone de couverture radioélectrique d'un satellite;
    - . la figure 7 représente les trois paramètres d, $\varphi$ et $\theta$ permettant la localisation d'un mobile par rapport à un satellite;
    - . la figure 8 est un schéma synoptique présentant le procédé de localisation;
    - . la figure 9 illustre le principe mis en oeuvre pour lever incertitude sur le signe de l'angle d'élévation instantanée;
    - . la figure 10 est un cas particulier de la figure 4, correspondant au système de radiotéléphonie Globalstar.

On décrit ci-dessous deux modes de réalisation préférentiels de l'invention, correspondant respectivement à un système AMRC (Globalstar) et à un système AMRT (GSM).

Le système Globalstar est un système cellulaire AMRC visant à offrir une couverture mondiale. Il se compose de trois segments :

- le segment spatial, formé de 48 satellites en orbite basse (1 414 km), de 8 satellites de secours, et de 2 centres de contrôle de la constellation,
- les terminaux, portatifs, installés sur des mobiles ou fixes, mono-mode (c'est à dire seulement capables d'inter-opérer avec Globalstar) ou bi-mode (c'est-à-dire capables d'inter-opérer avec Globalstar et un système cellulaire terrestre comme le GSM ou le DCS 1800),
- les stations de connexion, qui permettent d'établir des liaisons avec les réseaux publics commutés, mais aussi de gérer la mobilité, gestion qui permet la mise à jour de bases de données indiquant à la fois où se trouve un mobile et les attributs des services auxquels il a souscrit. Cette capacité permet une intégration aux réseaux mobiles. Il est ainsi possible aux abonnés bi-mode de conserver leur numéro mobile et d'être appelés indifféremment dans le réseau de terre ou dans le réseau satellite sans avoir à intervenir.

Le service de base dans Globalstar est la téléphonie. Globalstar permet également la transmission de données. Globalstar va aussi permettre l'offre d'un service nouveau, l'extension de l'itinérance au monde entier. Toutefois, il est clair que cette extension se limitera aux zones de service (c'est-à-dire en dehors des parties denses des agglomérations dans lesquelles en principe la couverture est fournie par un réseau cellulaire). En dehors de ces zones de service, il sera possible de disposer d'un signal d'appel fourni par un service de radio-messagerie unilatérale.

Du fait de la transparence et de l'intégration aux réseaux publics, il sera également possible de disposer des mêmes services que ceux offerts par les réseaux des opérateurs cellulaires.

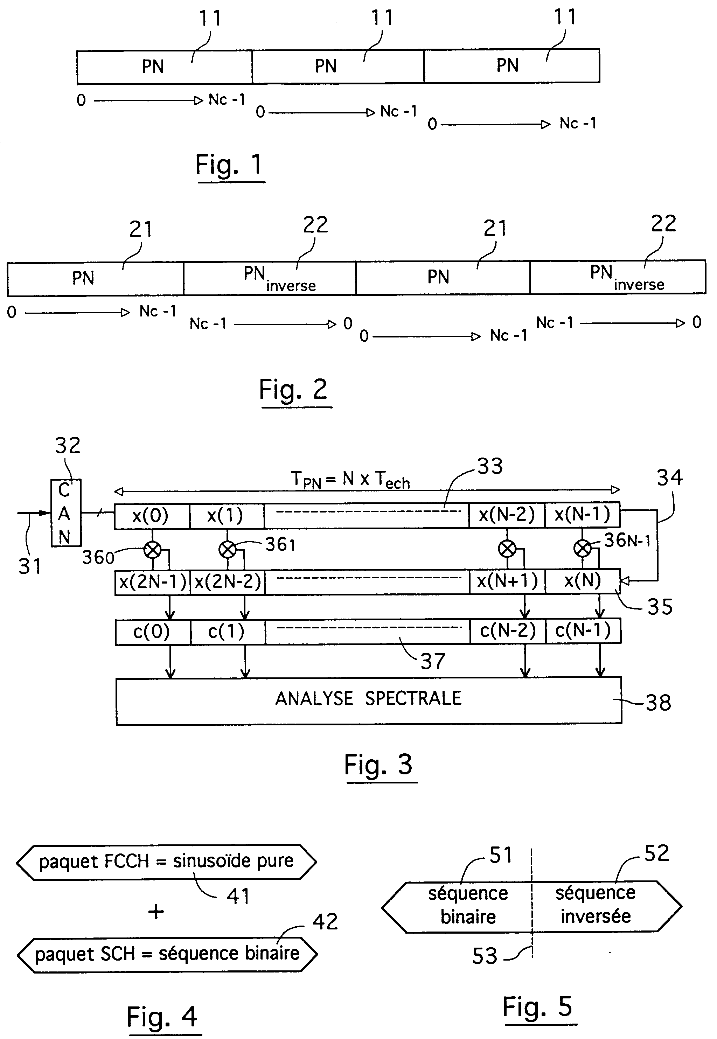

La figure 1 illustre la structure d'un signal pilote de type connu pour un système AMRC tel que Globalstar. Ce signal pilote est formé par la répétition ininterrompue d'une même séquence pseudo-aléatoire (PN) 11, constituée d'une série de $N_c$ éléments binaires $12_0$ à $12_{N_c-1}$.

Cette séquence PN peut par exemple être une séquence de 32767 ($10^{15}-1$) bits délivrés par un polynôme générateur adéquat. Elle est connue des récepteurs, de façon que ceux-ci puissent se synchroniser en temps sur le signal reçu. La synchronisation fréquentielle est faite de façon indépendante, et aucune information fiable n'est disponible sur le déplacement Doppler.

L'invention propose un nouveau signal de synchronisation, illustré en figure 2 et permettant d'assurer les synchronisations fréquentielle et temporelle des récepteurs.

Ce signal comprend toujours une première séquence PN(n) 21 (dite séquence directe) régulièrement transmise. Toutefois, cette première séquence 21 est remplacée à intervalles de temps réguliers par une seconde séquence PN ($N_c$-1-n) 22 (dite séquence inverse), obtenue par symétrie temporelle à partir de la première séquence PN.

Cette seconde séquence symétrique peut être réalisée au niveau binaire (inversion de l'ordre de lecture binaire), ou directement au niveau du signal modulé.

Elle est insérée régulièrement dans le signal pilote, à un rythme fonction des exigences du système (en termes de nombre de fausses détections et de déplacement Doppler acceptables, par exemple). Dans le mode de réalisation de la figure 2, les séquences transmises sont alternativement la séquence directe 21, puis la séquence inverse 22.

La figure 3 illustre de façon schématique un dispositif de synchronisation exploitant le signal de la figure 2.

Le signal pilote reçu 31 est échantillonné par un convertisseur CAN 32, qui délivre des échantillons x(i) avec une période d'échantillonnage $T_e$.

Ces échantillons sont introduits dans un premier registre à décalage 33 comprenant N (longueur des séquences PN) cellules. La période d'échantillonnage est choisie de façon que $T_{PN}=N.T_e$ corresponde à la durée de la séquence PN.

La sortie du registre 33 est rebouclée (34) sur l'entrée d'un second registre à décalage, comprenant également N cellules. Ainsi, à un instant donné :
- le registre 33 comprend les échantillons x(0) à x(N-1) ;
- le registre 34 comprend les échantillons x(N) à x(2N-1) ;

Le dispositif comprend encore des moyens de multiplication $36_0$ à $36_{N-1}$, réalisant chacun la multiplication de deux cellules des registres 33 et 35, de façon à délivrer N coefficients 37 c(i) tels que :

c(i) = x(i). x(2N - 1 - i) i variant de 0 à N - 1

Ces coefficients peuvent s'écrire de la façon suivante :

$$c(nT_e) = \cos(2\pi\delta nT_e + \phi(nT_e)).\cos(2\pi\delta(2N - 1 - n)T_e + \phi((2N - 1 - n)T_e)) = 1/2.\cos(2\pi\delta(2N - 1 - n)T_e + \phi(nT_e) + \phi(2N - 1 - n)T_e)) + 1/2.\cos(4\pi\delta nT_e - 2\pi\delta(2N - 1 - n)T_e + \phi(nT_e) - \phi((2N - 1 - n)T_e))$$

Lorsque, à un instant donné, le registre à décalage 33 contient exactement une séquence directe et le registre à décalage 35 exactement une séquence inverse (on dit alors qu'il y a coïncidence), on a l'égalité suivante :

$$\phi(nT_e) = \phi[(2N - 1 - n)T_e]$$

Le signal en sortie des multiplicateurs devient alors :

$$c(nT_e) = 1/2.\cos(2\pi\delta(2N - 1 - n)T_e + 2\phi(nT_e)) + 1/2.\cos(4\pi\delta nT_e - 2\pi\delta(2N - 1 - n)T_e)$$

On vérifie aisément que :
- le premier terme est un signal à spectre étalé ;
- le second terme est une sinusoïde pure, fonction de $2\delta$.

Lorsqu'il n'y a pas coïncidence, en revanche, on n'obtient qu'un signal à spectre étalé.

La séquence de coefficients issue du multiplicateur est transmise à des moyens 38 d'analyse spectrale. Cette analyse effectuée tous les $T_e$ permet, selon des techniques classiques, de :
- acquérir la référence temporelle de la station de base, dès qu'il y a coïncidence ;
- de mesurer la valeur du déplacement Doppler, par mesure de la fréquence de la sinusoïde égale à $2\delta$.

Il est à noter que la connaissance du déplacement Doppler permet de contrôler la synchronisation fréquentielle, mais peut également être utile à d'autres applications, telles que la radiolocalisation, ainsi que cela sera décrit ultérieurement.

Par ailleurs, on remarquera qu'il n'est pas obligatoire d'insérer la séquence inverse dans le signal pilote. En effet, selon un autre mode de réalisation, celle-ci peut être transmise sur une autre fréquence. Dans ce cas, on transmet d'une part le signal pilote ne comprenant que la séquence directe, en permanence, et d'autre part, au moins périodiquement, la séquence inverse.

Dans ce cas, bien sûr, le dispositif de la figure 3 doit être adapté, les deux registres à décalage n'étant pas chaînés, mais alimentés chacun indépendamment par chaque séquence.

Plus généralement, d'autres structures de ce dispositif sont possibles, dès lors qu'on effectue le calcul des coefficients $c(i)$ puis leur analyse.

L'invention peut également s'appliquer à des signaux AMRT. Comme indiqué précédemment, dans le système GSM on prévoit actuellement deux paquets distincts pour la synchronisation, ainsi que cela est illustré en figure 4.

Le premier paquet 41, appelé FCCH, est une sinusoïde pure. Il permet la synchronisation fréquentielle. Le second paquet 42, appelé SCH, comprend une séquence binaire dont les propriétés d'autocorrélation permettent de récupérer la synchronisation temporelle.

Ces deux paquets 41 et 42 sont transmis régulièrement, sur une porteuse BCCH prévue à cet effet.

Selon l'invention, on propose de remplacer ces deux paquets par un paquet unique permettant les synchronisations temporelle et fréquentielle. Un tel paquet est illustré en figure 5.

Ce paquet comprend d'une part une séquence pseudo-aléatoire inversée 52, selon le principe décrit précédemment. En d'autres termes, la structure de ce paquet est symétrique par rapport à l'axe de symétrie 53. Le traitement effectué sur ce paquet est identique à celui décrit en relation avec la figure 3. Cette technique permet notamment l'économie de la transmission d'un paquet, ou la réduction de la période entre deux paquets de synchronisation.

Par ailleurs, ainsi qu'on l'a indiqué précédemment, le signal de l'invention peut être utilisé pour estimer la réponse impulsionnelle du canal de transmission, notamment pour réaliser l'égalisation de canal.

On se place par exemple dans un système AMRT terrestre, et on suppose que la station de base transmet le paquet contenant le signal pilote à intervalles de temps réguliers. Après passage dans le canal de transmission, la station mobile reçoit le signal suivant :

$$r(t) = A_0\cos(2\pi\delta_0 t + \phi(t)) + \Sigma_n A_n\cos(2\pi\delta_n(t - \tau_n) + \phi(t - \tau_n))$$

n variantde 1 à M.

Il est constitué par :

- une composante directe (amplitude $A_0$ + déplacement Doppler $\delta_0$) ;
- M composantes secondaires (amplitude $A_N$+déplacement Doppler $\delta_N$)

L'analyse de ce signal par le dispositif de la figure 3 révèle un nombre de coïncidences égal au nombre total des composantes du signal (L+M). Pour déterminer la réponse impulsionnelle du canal de transmission, il suffit donc de mesurer l'écart relatif en temps et en amplitude entre la première coïncidence (prise comme origine) et les coïncidences suivantes. Si $\Delta(0,n)$ désigne l'intervalle de temps (exprimé en fonction de $T_c$) séparant l'apparition de la première coïncidence d'indice 0 de celle d'indice n, on obtient :

$$\tau_n = 2\Delta(0, n)$$
$$h(\tau_n) = A'_n/A'_0$$
$$h(t) = 0 \text{ pour } t \neq \tau_n$$

où A' désigne l'amplitude de la sinusoïde détectée lors de la coïncidence.

Ainsi, il n'est plus nécessaire d'insérer une séquence d'apprentissage dans chaque paquet transmis pour déterminer la réponse impulsionnelle du canal. Cela peut être réalisé à l'aide du signal de l'invention.

Dans la description qui précède, on a ainsi décrit un signal de contrôle pour récepteur formé par la juxtaposition de deux éléments de signaux d'égale durée et temporellement symétriques. On a montré en particulier que le signal ainsi obtenu facilite l'acquisition de la synchronistation initiale du terminal dans le cadre d'un système de radiotéléphonie par satellite indépendamment du mode d'accès utilisé (Accès Multiple par Répartition dans le Temps (AMRT) ou Accès Multiple par Répartition par Code (AMRC).

L'établissement et le maintien d'une liaison radioélectrique entre un terminal et un satellite défilant constituent en effet deux opérations difficiles dans la mesure où les signaux transmis sont affectés simultanément par un fort déplacement Doppler et par une variation importante du délai de propagation.

Transmis à intervalles de temps réguliers, le signal proposé permet alors l'acquisition simultanée de la synchronisation fréquentielle et temporelle (alors que dans le système GSM l'émission de deux paquets spécifiques est nécessaire pour aboutir au même résultat) économisant ainsi un canal.

En fait on peut faire encore mieux, dans le cas d'un système AMRT, en généralisant la structure proposée à tous les paquets transmis (signalisation et trafic). L'acquisition est alors rendue possible à tout moment par l'utilisation de n'importe quel paquet émis.

On notera cependant que le terme signal de contrôle utilisé pour définir la présente invention n'est pas limitatif d'une application déterminée mais s'applique à tout signal susceptible d'être utilisé pour réaliser une fonction de contrôle en réception, au sens défini plus haut, c'est à dire, en particulier, une fonction de synchronisation ou une fonction d'égalisation.

Les avantages sont les suivants :

- suppression pure et simple de la notion de signal de synchronisation dédié;

- économie de deux canaux par rapport à un système AMRT classique (il s'agit des canaux FCCH et SCH dans le système GSM) ;
- gain en rapidité lors du basculement d'une communication d'une cellule à l'autre ("handover") dans le cas des systèmes de radiotéléphonie terrestres.;
- gain en rapidité lors du basculement d'une communication d'un satellite à l'autre ("changeover") dans le cas des systèmes de radiotéléphonie par satellites;
- diminution de la complexité des codes détecteurs et correcteurs utilisés pour protéger la séquence de symboles transmise (la structure proposée équivaut à une duplication de la séquence binaire transmise).

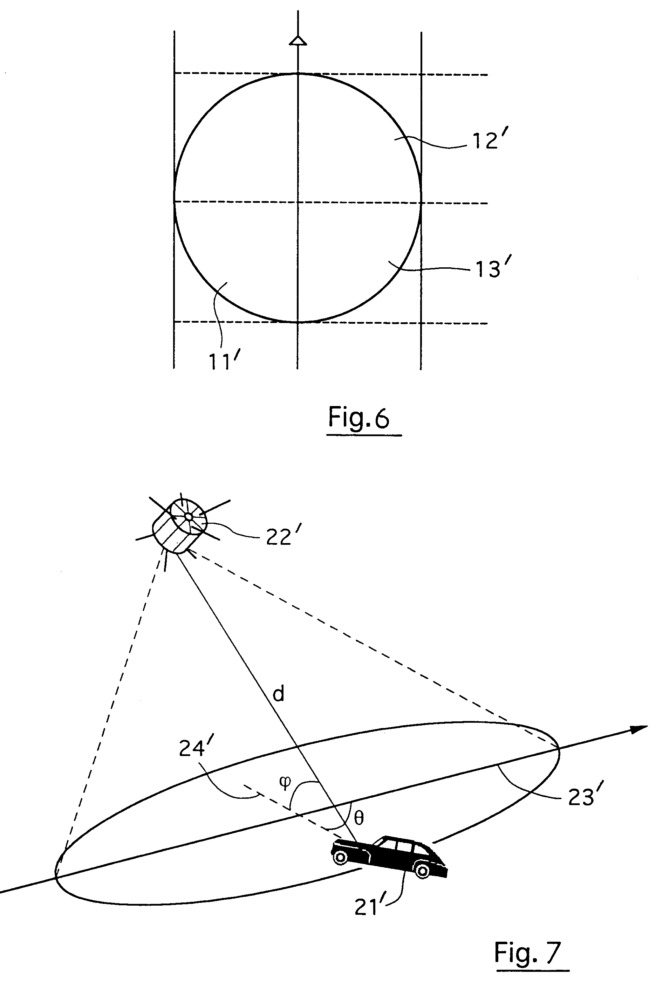

On décrit maintenant, en relation avec les figures 6 à 10, l'application de l'invention à la radiolocalisation.

La localisation géographique d'une station mobile est l'un des services proposés pour les futurs systèmes de radiotéléphonie par satellite. Plus généralement, la radiolocalisation par satellite est une technique appelée à se développer. Le procédé de radiolocalisation décrit ci-dessous ne nécessite la réception de signaux émis que par un seul satellite.

Le mode de réalisation décrit ci-dessous est notamment prévu pour être mis en oeuvre dans le cadre du système Globalstar.

Ce mode de réalisation ajoute encore une fonctionnalité à ce système, à savoir la localisation des mobiles.

La zone de couverture radioélectrique du satellite est illustrée en figure 6. Elle peut être décrite en première approximation par un disque 11' présentant un demi-disque supérieur 12' et un demi-disque inférieur 13'.

Le demi-disque supérieur 12' définit une zone pour laquelle le signal en provenance du satellite et reçu par le terminal est affecté d'un déplacement Doppler positif (le satellite se rapproche du terminal).

Le demi-disque inférieur 13' définit une zone pour laquelle le signal en provenance du satellite et reçu par le terminal est affecté d'un déplacement Doppler négatif (le satellite s'éloigne du terminal).

Ces deux demi-disques 12' et 13' sont définis par le diamètre de Doppler nul 14', qui est perpendiculaire à la trajectoire 15' suivie par le satellite.

La figure 7 illustre les paramètres nécessaires pour localiser, de façon connue, un mobile. Il est à noter que le mode de réalisation décrit ne concerne pas spécifiquement cette méthode de localisation, mais précisément la façon de déterminer les différents paramètres nécessaires.

En effet, on sait que la position instantanée du mobile 21' par rapport au satellite 22' défilant est entièrement définie par les trois paramètres suivants :

- la distance instantanée d entre le satellite 22' et la station mobile 21' ;
- l'élévation instantanée $\varphi$ du satellite 22' par rapport au terminal 21' ;
- l'angle $\theta$ entre les projections sur la surface terrestre de la trajectoire 23' suivie par le satellite et la direction 24' satellite - terminal.

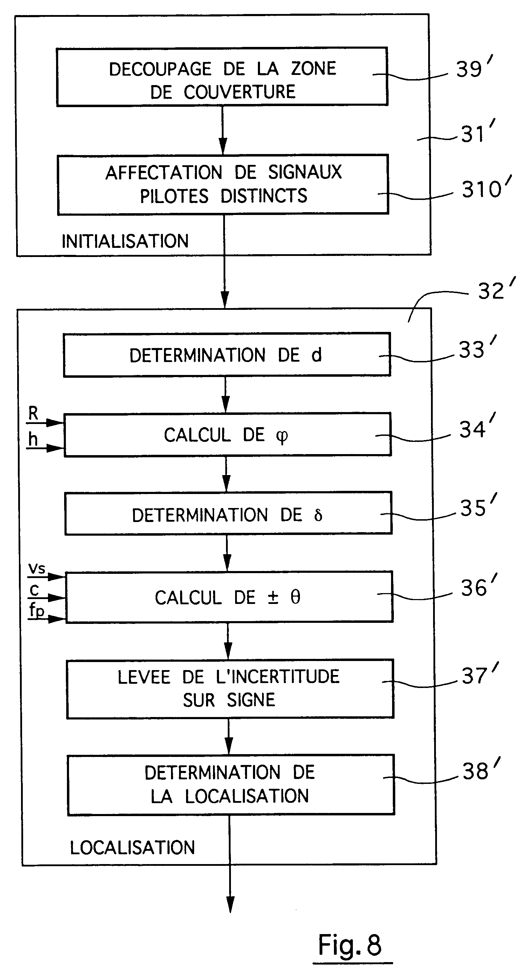

Ces différents paramètres sont déterminés à l'aide du procédé illustré en figure 8.

Ce procédé comprend deux types de traitement. Tout d'abord un traitement 31' d'initialisation, réalisé une fois pour toute au niveau du satellite, et qui permet de lever l'incertitude sur le signe de $\theta$, ainsi que cela est décrit par la suite, et un traitement 32' de localisation, pouvant être réalisé à tout instant et par tout mobile équipé des moyens de traitement adéquat.

La localisation 32' d'un mobile consiste donc à déterminer la position d'un mobile à partir des signaux émis par un satellite unique.

Pour cela, le procédé comprend tout d'abord une étape 33' de détermination de la distance d entre le satellite et la station mobile.

De façon classique, cette détermination peut être obtenue, par exemple, en mesurant le délai de propagation d'un signal transmis entre le satellite et le terminal.

Ensuite, on calcule (34') l'élévation instantanée $\varphi$ du satellite par rapport au terminal, à partir de d, du rayon terrestre R et de l'altitude h du satellite. Ces données R et h sont connues du terminal mobile, si celui-ci effectue lui-même tous les traitements de localisation. Plus généralement, dans ce cas, celui-ci connaît les éphémérides du satellite considéré.

Afin de limiter la complexité du terminal, l'essentiel du traitement concernant la détermination de la position de la station mobile peut également être accompli par la station terrienne correspondante.

Par ailleurs, on détermine le déplacement Doppler $\delta$. Cette opération est effectuée par la station mobile lors de la synchronisation initiale, et ensuite à intervalles réguliers.

Selon cette technique, le satellite émet un signal pilote comprenant des éléments de signaux temporellement symétriques, et par exemple au moins une première séquence numérique pseudo-aléatoire de synchronisation x(0) à x(N-1), et, périodiquement, au moins une seconde séquence numérique x(N-1) à x(0), correspondant à l'inverse, obtenu par symétrie temporelle, de ladite première séquence.

Cette structure de signal permet, après analyse adéquate, de récupérer la référence temporelle de la station de base et de mesurer le déplacement Doppler.

On sait que le déplacement Doppler $\delta$ correspond à :

$$\delta = v_s/c.f_p.\cos(\theta).\cos(\varphi)$$

où : $v_s$ est la vitesse de défilement du satellite ;

c est la célérité de la lumière ;

$f_p$ est la fréquence porteuse.

Ces trois informations sont connues du terminal. Il est donc possible de calculer (36') cos (θ) à partir de l'équation (1) et donc θ, en valeur absolue.

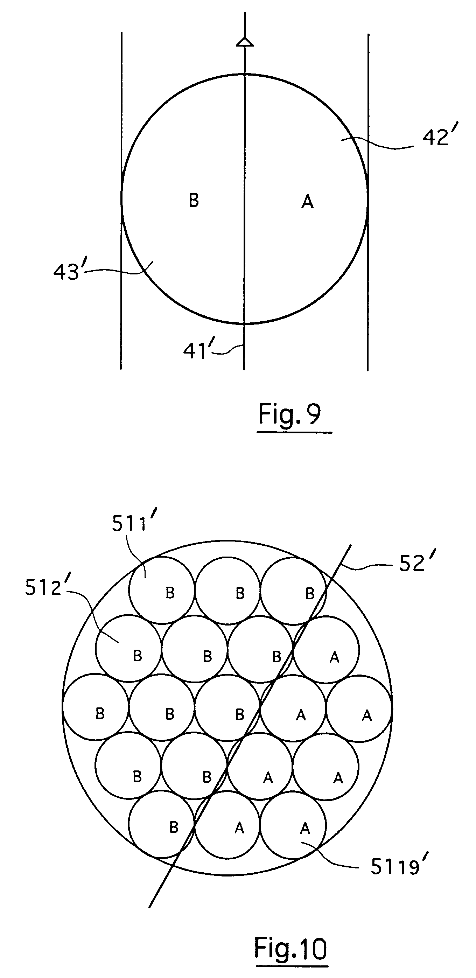

Il reste donc une incertitude sur le signe de θ. Cette incertitude peut être levée par l'emploi de deux signaux pilote spécifiques A et B et en découpant la zone de couverture radioélectrique en deux zones relativement à la trajectoire du satellite, ainsi que cela est illustré en figure 9 :

- le signal de synchronisation A est diffusé uniquement sur le demi-disque à droite 42' de la trajectoire 41' ;
- le signal de synchronisation B est diffusé uniquement sur le demi-disque à gauche 43' de la trajectoire 41'.

Cela correspond à l'initialisation 31', pendant laquelle la zone de couverture est découpée (39') en deux zones distinctes, auxquelles on affecte (310') des signaux de synchronisation distincts, bien sûr connus des terminaux. Dans le cas particulier du système Globalstar, on sait que la zone de couverture radioélectrique est assimilée à un disque composé de 19 faisceaux $51'_1$ à $51'_{19}$, ainsi que cela est illustré en figure 10.

La répartition des signaux pilote A et B se fait de façon similaire, de part et d'autre de la trajectoire 52' du satellite.

Ainsi, la localisation 32' comprend une étape 37' de levée de l'incertitude sur le signe de θ, par l'analyse des caractéristiques fréquentielles su signal pilote reçu qui permet au terminal de se situer dans l'un ou l'autre des demi-disques 42' et 43'.

La connaissance du triplet (θ, φ, δ) permet, comme indiqué précédemment, de déterminer (38') la position de la station mobile.

Cette dernière étape est avantageusement réalisée par la station terrienne. Dans ce cas, le rôle du terminal se limite à :

- permettre la mesure du délai de propagation satellite-station mobile par la station terrienne ;
- effectuer la mesure du déplacement Doppler (signe et valeur absolue) ;
- déterminer le signal de synchronisation détecté (A ou B) ;
- transmettre ces informations à la station terrienne.

La connaissance du délai de propagation, du déplacement Doppler, du signal de synchronisation détecté, des éphémérides du satellite défilant ainsi que du rayon terrestre permet à la station terrienne de calculer la position de la station mobile, et éventuellement de lui transmettre (service de localisation).

## Revendications

1. Signal de contrôle pour récepteurs, caractérisé en ce qu'il est formé par la juxtaposition de deux éléments de signaux (21, 22 ; 51, 52) d'égales durées et temporellement symétriques.

2. Signal selon la revendication 1, caractérisé en ce qu'il comprend au moins une première séquence numérique pseudo-aléatoire (21;51) $s(N_S-1)$ à $s(0)$ et, périodiquement, au moins une seconde séquence numérique (22;52) $s(N_S-1)$ à $s(0)$, correspondant à l'inverse, obtenu par symétrie temporelle, de ladite première séquence.

3. Signal selon l'une quelconque des revendications 1 et 2, caractérisé en ce qu'il comprend alternativement ladite première séquence (21), puis ladite seconde séquence (22).

4. Signal selon l'une quelconque des revendications 1 à 3, caractérisé en ce qu'il est destiné à synchroniser fréquentiellement et temporellement des récepteurs AMRC.

5. Signal selon l'une quelconque des revendications 1 à 3 caractérisé en ce qu'il est destiné à synchroniser fréquentiellement et temporellement des récepteurs AMRT, et en ce qu'il se présente sous la forme de paquets de synchronisation (Fig. 5) régulièrement insérés dans un signal principal, chacun desdits paquets de synchronisation comprenant successivement ladite première séquence, puis ladite seconde séquence.

6. Signal selon l'une quelconque des revendications 1 à 5, caractérisé en ce qu'il est destiné à égaliser les signaux reçus par lesdits récepteurs.

7. Signal selon l'une quelconque des revendications 1 à 6, caractérisé en ce qu'il est transmis par satellite.

8. Dispositif de synchronisation fréquentielle et temporelle à l'aide d'un signal selon l'une quelconque des revendications 1 à 7, caractérisé en ce qu'il comprend :
   - un échantillonneur (32) délivrant des séries d'échantillons s(i) dudit signal de synchronisation correspondant auxdites séquences ;
   - un premier registre à décalage (33) comprenant N cellules, alimenté par ledit échantillonneur ;
   - un second registre à décalage (35) comprenant N cellules, alimenté par la sortie (34) dudit premier registre à décalage ;
   - des moyens ($36_i$) de multiplication deux à deux du contenu des cellules de même rang desdits premier et second registres à décalage (33, 35), délivrant N valeurs c(0) à c(N-1) ; et

- des moyens (38) d'analyse spectrale desdites N valeurs, délivrant d'une part une première information représentative d'une référence temporelle, et d'autre part une seconde information représentative du déplacement fréquentiel.

9. Procédé de synchronisation fréquentielle et temporelle à l'aide d'un signal selon l'une quelconque des revendications 1 à 7, caractérisé en ce qu'il comprend les étapes suivantes :
- réception de 2N échantillons correspondant respectivement aux $N_S$ éléments numériques de ladite première séquence s(0) s($N_S$-1) et aux $N_S$ éléments numériques de ladite seconde séquence s($N_S$-1) à s(0) ;
- multiplication deux à deux des éléments numériques de même rang de chacune desdites séquences, délivrant N valeurs
  $$c(i) = x(i) * x(N - 1 - i) ;$$
- analyse spectrale desdites N valeurs, de façon à déterminer d'une part une première information représentative d'une référence temporelle, et d'autre part une seconde information représentative du déplacement fréquentiel.

10. Procédé selon la revendication 9 caractérisé en ce que lesdites valeurs c(i) s'écrivent :
$$c(nT_e) = 1/2.\cos(2\pi\delta(2N - 1)T_e + 2\Phi(nT_e))$$
$$+ 1/2.\cos(4\pi\delta nT_e - (2\pi\delta(2N - 1)T_e)) \quad (1)$$
où : n est un indice variant de 0 à N-1 ;

$T_e$ est la période d'échantillonnage dudit signal de synchronisation ;

δ est représentatif dudit déplacement fréquentiel ;

Φ est représentatif de ladite référence temporelle ;

et en ce que ladite étape d'analyse comprend les étapes suivantes :
- analyse du premier terme de l'équation (1), correspondant à un signal à spectre étalé, pour déterminer ladite référence temporelle ; et
- analyse du second terme de l'équation (1), correspondant à une sinusoïde de fréquence 2δ, pour déterminer ladite information représentative dudit déplacement fréquentiel.

11. Dispositif d'égalisation à l'aide d'un signal selon l'une quelconque des revendications 1 à 7, caractérisé en ce qu'il comprend :
- un échantillonneur (32) délivrant des séries d'échantillons s(i) dudit signal de synchronisation correspondant auxdites séquences ;
- un premier registre à décalage (33) comprenant N cellules, alimenté par ledit échantillonneur;
- un second registre à décalage (35) comprenant N cellules, alimenté par la sortie dudit premier registre à décalage ;
- des moyens ($36_i$) de multiplication deux à deux du contenu des cellules de même rang desdits premier et second registres à décalage, délivrant N valeurs c(0) à c(N-1) ; et
- des moyens (38) d'estimation de la réponse impulsionnelle du canal de transmission.

12. Récepteur de signaux numériques transmis en AMRC, comprenant un dispositif selon l'une quelconque des revendications 8 et 11 et/ou mettant en oeuvre un procédé selon l'une quelconque des revendications 9 et 10.

13. Récepteur de signaux numériques transmis en AMRT, comprenant un dispositif selon la revendication 6 et/ou mettant en oeuvre un procédé selon l'une quelconque des revendications 7 et 8.

14. Procédé de synchronisation fréquentielle et temporelle pour récepteurs de signaux numériques, caractérisé en ce qu'on transmet vers lesdits récepteurs au moins une première séquence numérique pseudo-aléatoire de synchronisation s(0) à s($N_S$-1), et, au moins périodiquement, au moins une seconde séquence numérique s($N_S$-1) à s(0), correspondant à l'inverse, obtenu par symétrie temporelle, de ladite première séquence.

Fig. 1

Fig. 2

$$T_{PN} = N \times T_{ech}$$

ANALYSE SPECTRALE

Fig. 3

paquet FCCH = sinusoïde pure

+

paquet SCH = séquence binaire

Fig. 4

séquence binaire | séquence inversée

Fig. 5

12′

13′

11′

Fig.6

22′

d

24′

φ

θ

23′

21′

Fig. 7

```
┌─────────────────────────────────────────────────┐
│   ┌─────────────────────────────────┐           │
│   │   DECOUPAGE  DE  LA  ZONE       │────── 39'  │
│   │       DE  COUVERTURE            │           │
│   └─────────────────────────────────┘           │
│                    │                      ── 31' │
│                    ▼                             │
│   ┌─────────────────────────────────┐           │
│   │   AFFECTATION  DE  SIGNAUX      │────── 310' │
│   │      PILOTES  DISTINCTS         │           │
│   └─────────────────────────────────┘           │
│   INITIALISATION                                 │
└─────────────────────────────────────────────────┘
                     │
                     ▼                        32'
┌─────────────────────────────────────────────────┐
│   ┌─────────────────────────────────┐           │
│   │     DETERMINATION  DE  d        │────── 33'  │
│   └─────────────────────────────────┘           │
│                    │                             │
│   R ──▶            ▼                             │
│   ┌─────────────────────────────────┐           │
│   h ──▶│      CALCUL  DE  φ          │────── 34' │
│   └─────────────────────────────────┘           │
│                    │                             │
│                    ▼                             │
│   ┌─────────────────────────────────┐           │
│   │     DETERMINATION  DE  δ        │────── 35'  │
│   └─────────────────────────────────┘           │
│  Vs ──▶            │                             │
│                    ▼                             │
│   c ──▶┌─────────────────────────────────┐      │
│        │      CALCUL  DE  ± θ         │──── 36'  │
│  fp ──▶└─────────────────────────────────┘      │
│                    │                             │
│                    ▼                             │
│   ┌─────────────────────────────────┐           │
│   │   LEVEE  DE  L'INCERTITUDE      │────── 37'  │
│   │        SUR  SIGNE               │           │
│   └─────────────────────────────────┘           │
│                    │                             │
│                    ▼                             │
│   ┌─────────────────────────────────┐           │
│   │     DETERMINATION  DE           │────── 38'  │
│   │     LA  LOCALISATION            │           │
│   └─────────────────────────────────┘           │
│   LOCALISATION     │                             │
└─────────────────────────────────────────────────┘
                     │
                     ▼
```

## Fig. 8

Fig. 9

Fig.10

**Office européen des brevets**

# RAPPORT DE RECHERCHE EUROPEENNE

Numero de la demande

EP 95 40 1438

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | WO-A-87 01490 (MOTOROLA)<br>* page 6, ligne 21 - page 7, ligne 8 *<br>--- | 1,2,14 | H04B7/212 |
| A | US-A-5 297 162 (LEE ET AL.)<br>* colonne 3, ligne 50 - colonne 4, ligne 50; figures 1-5 *<br>--- | 4,6 | |
| A | WO-A-91 00660 (MOTOROLA)<br>* revendications *<br>--- | 5,6 | |
| A | EP-A-0 551 803 (ERICSSON)<br>* revendications; figure 4 *<br>--- | 5,8-11 | |
| A | WO-A-91 02415 (AGENCE SPATIALE EUROPEENNE)<br>* page 4, ligne 31 - page 5, ligne 3 *<br>----- | 4,7 | |

**DOMAINES TECHNIQUES RECHERCHES (Int.Cl.6)**

H04B
H04L

Le présent rapport a été établi pour toutes les revendications

| Lieu de la recherche | Date d'achèvement de la recherche | Examinateur |
|---|---|---|
| LA HAYE | 28 Juillet 1995 | Bischof, J-L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant